# EUROPEAN PATENT SPECIFICATION

(11) **EP 2 354 440 B1**
(45) Date of publication and mention of the grant of the patent: **30.05.2018**
(21) Application number: 10197407.9
(22) Date of filing: 30.12.2010
(51) Int. Cl.: E21B 33/038

(54) **Communications connection in a subsea well**
Kommunikationsverbindung in einem Unterwasserbohrloch
Connexion de communication dans un puits sous-marin

(30) Priority: 21.01.2010 GB 201000964
(43) Date of publication of application: 10.08.2011
(73) Proprietor: GE Oil & Gas UK Limited, Nailsea Bristol BS48 1BS (GB)
(72) Inventor: Davey, Peter, Weston super Mare, Somerset BS22 9YR (GB); Kent, Ian, Nailsea, Bristol BS48 2BH (GB)
(74) Representative: Lee, Brenda

(56) References cited:
- EP-A2- 0 356 090
- WO-A1-2009/070062
- WO-A2-2005/052646
- JP-A- S58 136 009
- US-A1- 2004 262 008

## Description

### Field of the Invention

The present invention relates to a communications connection in a subsea well.

### Background of the Invention

Subsea wells, such as hydrocarbon extraction wells, are typically supplied with hydraulic and electrical power and communications via an umbilical from a surface platform or surface vessel. Modern wells use optical fibres for communication to the umbilical as they are able to handle the higher bandwidths required. The umbilical is typically terminated in an umbilical termination assembly (UTA)whereby power and communications are distributed to the multiplicity of well trees typical of a subsea well complex, for example either directly or via one or more subsea distribution units. Communication from the UTA can be via fibre optics and/or copper in dependence on a combination of the bandwidth requirements and distances of the individual well trees from the UTA. Termination of the optical fibres from the umbilical is effected by fibre optic connectors, typically as many as at least six being required, with linking of the UTA outputs to the well trees requiring further connectors. The problem is that optical fibre connectors suitable for the high water pressure environment of subsea wells are expensive and typically do not have the confidence of well operators as much as well established electrical connectors. This invention removes the need for fibre optic connectors.

EP 0356090 A2 discloses a fibre optic data coupler for use in subsea applications. JP S58136009 A discloses a plug containing an opto-electric converter.

### Summary of the Invention

The present disclosure generally relates to a communication connection in a subsea well for an optical fibre as defined in claim 1 From another aspect the present disclosure relates to a method for providing a communication connection in a subsea well as defined in claim 4. The connection could be between said optical fibre and a subsea electronics module at a well tree or at an underwater termination assembly or at a subsea distribution unit for example.

Said fibre is typically in an umbilical.

### Brief Description of the Drawings

Fig. 1 shows diagrammatically the termination of an umbilical at a UTA, together with a well tree coupled with the UTA;
Figs. 2a-2c show a first set of configurations of the invention; and
Figs. 3a-3c show a second set of configurations of the invention.

### Detailed Description of Embodiments of the Invention

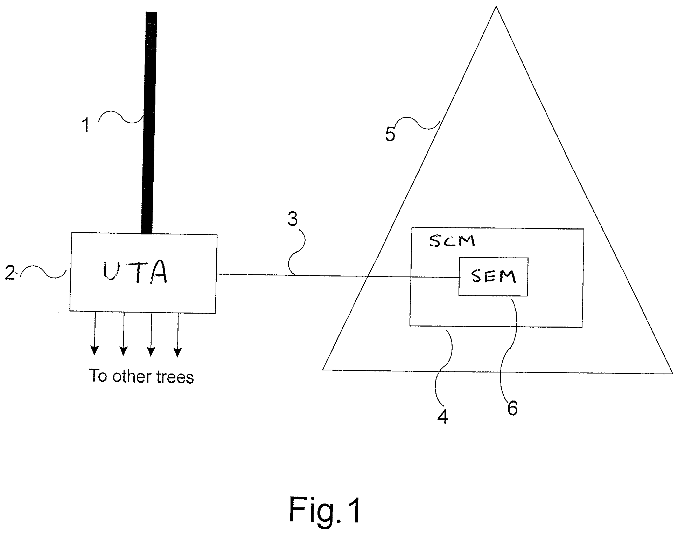

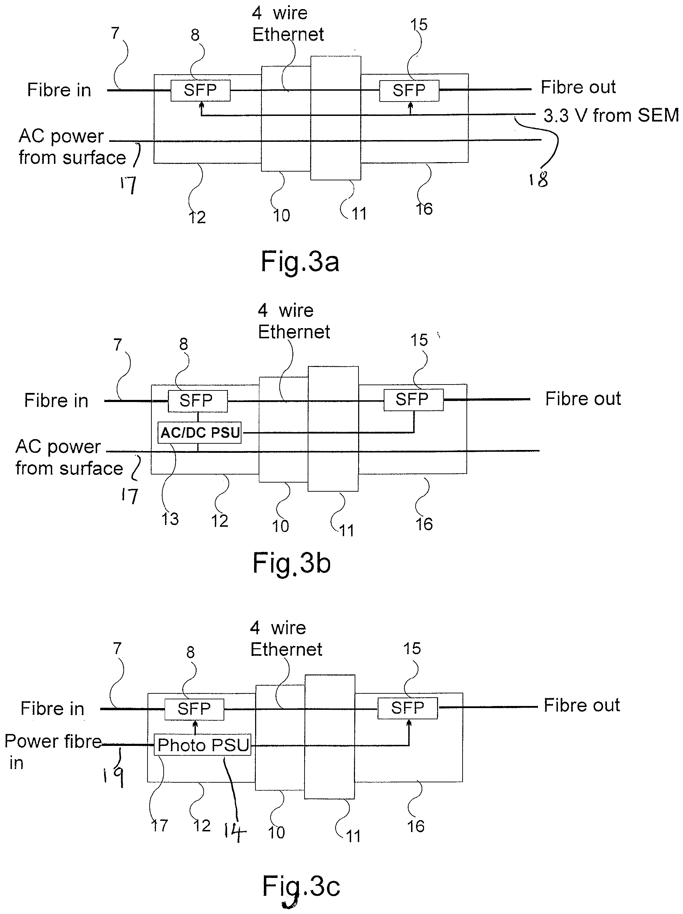

Only the embodiment represented in Fig.3c of the present disclosure is in accordance with the invention. All other configurations are falling outside the scope of the claims. Fig. 1 shows a typical arrangement of the termination of an umbilical 1 from a surface facility such as a surface platform or surface vessel at UTA 2, the output 3 of which feeds hydraulic power to a subsea control module (SCM) 4 mounted on a well tree 5 and feeds electrical power and communication to a subsea electronic module (SEM) 6 housed in the SCM 4. The UTA 2 also feeds hydraulic and electrical power and communications to other trees in a well complex.

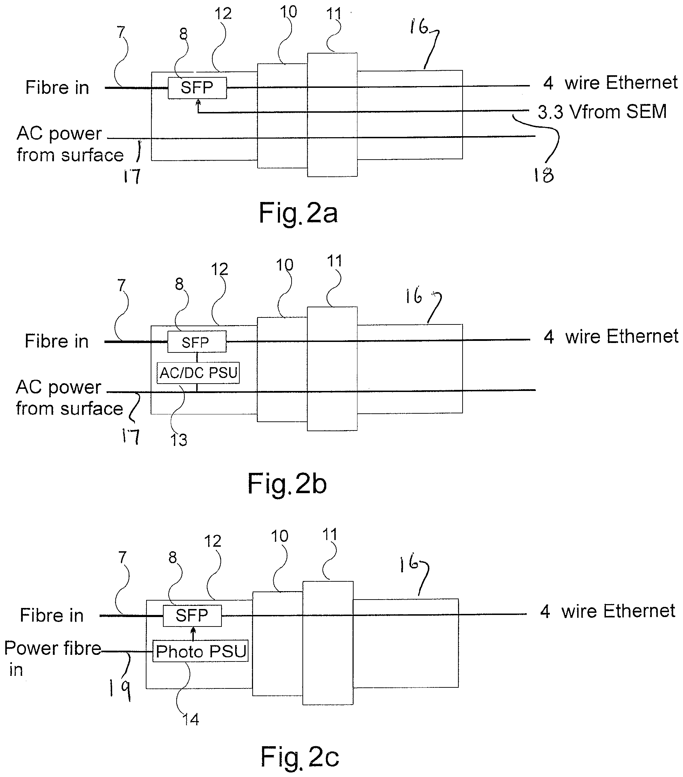

In Figs. 2a-2c and 3a-3c, reference numeral 7 denotes an optical fibre in an umbilical from a UTA, reference numeral 8 designates a small form factor pluggable device (SFP) at which the fibre 7 terminates and reference numerals 10 and 11 designate two mated together parts of a copper connector having end shells 12 and 16 respectively, the SFP 8 being mounted in and moulded into the end shell 12 of the connector part 10.

Fig. 2a shows an arrangement according to the invention where the required communication interface to the SEM is copper, such as 4-wire Ethernet, reference numeral 17 designating a line carrying AC power from the umbilical from the surface facility. SFPs suitable for the invention are available off the shelf. Electric power is required for the SFP 8, typically at 3.3 volts. This can be provided from the DC power supplies already available in the SEM via a line 18. Alternatively, since the power requirements of the SFP 8 are small, an alternative power source, as shown in Fig. 2b, is practical in which a small AC to DC power supply unit 13, such as a switching or capacitor fed power supply, deriving power from the AC power on line 17 is also mounted in the end shell 12. This arrangement saves two connections through the connector 10/11, which can result in significant cost reduction. A further alternative way of providing electric power to the SFP 8 (particularly if there are spare optical fibres in the umbilical from the UTA and as illustrated in Fig. 2c) is to transmit light down a fibre 19 and utilise a photovoltaic cell to convert the light to electrical power to supply the SFP, i.e. a photovoltaic power supply unit 14, which can also be moulded in the end shell 12 of the connector 10/11. The light typically would be provided via the umbilical from the surface facility to the UTA.

Figs. 3a-3c show modifications of the arangements of Figs. 2a-2c respectively where the required communication interface to the SEM is optical fibre. In Fig. 3a, an SFP 15 is also mounted in and moulded in the end shell 16 of connector part 11 of the mated copper connector 10/11. The SFP 8 converts the fibre optic output to an electrical interface, such as 4-wire Ethernet, which feeds through the copper connector 10/11 to the SFP 15 which converts the electrical interface back to a fibre optic one. Thus, an electrical connector can be used to achieve the interface instead of a much more expensive optical fibre connector. The short length of copper in the connector 10/11 allows data rates of up to 100 Mbits/second, which is adequate for most subsea well applications and typically matches the fibre optic achievable bandwidth. Electrical power for the SFPs 8 and 15 is provided (as in Fig. 2a) from existing power supplies in the SEM. Fig. 3b shows an arrangement in which electric power is supplied to the SFPs 8 and 15 by a small power supply unit as in Fig. 2b and Fig. 3c shows the power supply derived from a photovoltaic cell 14 energised by light via a spare optical fibre as in Fig. 2c.

The present invention may be applied not just to an optical fibre connection at a well tree, but also to an optical fibre connection at a UTA (e.g. from an umbilical from a surface facility or out of the UTA) and/or into or out of a subsea distribution unit. Also, the invention is not restricted to the use of 4-wire Ethernet - it may be applied, for example, to any form of serial communications. A further alternative to the forms of power supply for the or each SFP is to use a rechargeable battery, for example a battery rechargeable using light from an optical fibre.

### Advantages of Using the Invention

1/ Expensive fibre optic connectors are eliminated and replaced by much cheaper electrical connectors.
2/ Many modern wells and their SEMs employ Ethernet interfaces. This invention provides a neat and low cost direct conversion from the fibre optic output of the umbilical to the Ethernet communication system.

## Claims

1. A communication connection in a subsea well for an optical fibre (7), the communication connection comprising:
an electrical connector comprising first and second mating parts (10, 11), each of the first and the second mating parts having a respective shell portion (12, 16);
a first small form factor pluggable device (8) received in the shell portion of the first mating part for converting an optical signal of the optical fibre into an electrical signal; and
a second small form factor pluggable device (15) received in the shell portion of the second mating part for converting the electrical signal back to an optical signal,
wherein power for both the first and the second small form factor pluggable devices is provided by optical energy from a further optical fibre (19) in communication with a photovoltaic cell (14), wherein the photovoltaic cell is configured to convert the optical energy into the power for both the first and the second small form factor pluggable devices, and wherein the photovoltaic cell is moulded in an end portion of the electrical connector.

2. The communication connection according to claim 1, wherein the communication connection is between said optical fibre (7) and a subsea electronics module (6) at a well tree (5) or is at an underwater termination assembly (2) or is at a subsea distribution unit.

3. The communication connection according to claim 1 or 2, wherein said fibre (7) is in an umbilical (1).

4. A method of providing a communication connection in a subsea well, the method comprising:
providing first and second mated parts (10, 11) which are coupled to each other, each of the first and second mated parts having a respective shell portion (12, 16);
using a first small form factor pluggable device (8) to convert an optical signal of an optical fibre (7) into an electrical signal;
disposing the first small form factor pluggable device to be received in the shell portion of the first mated part for converting the optical signal into the electrical signal;
disposing a second small form factor pluggable device (15) to be received in the shell portion of the second mated part for converting the electrical signal back to an optical signal, wherein the first and the second small form factor pluggable devices are received in an electrical connector; and
powering both the first and the second small form factor pluggable devices by optical energy from a further optical fibre (19) in communication with a photovoltaic cell (14), wherein the photovoltaic cell is configured to convert the optical energy into power for the first and the second small form factor pluggable devices, and wherein the photovoltaic cell is moulded in an end portion of the electrical connector.

5. The method according to claim 4, wherein the communication connection is between said optical fibre (7) and a subsea electronics module (6) at a well tree (5) or is at an underwater termination assembly (2) or is at a subsea distribution unit.

6. The method according to claim 4 or 5, wherein said fibre (7) is in an umbilical (1).

## Patentansprüche

1. Kommunikationsverbindung in einem Unterwasserbohrloch für eine optische Faser (7), wobei die Kommunikationsverbindung Folgendes umfasst:
einen elektrischen Verbinder umfassend erste und zweite Gegenstücke (10, 11), wobei jedes der ersten und zweiten Gegenstücke ein jeweiliges Schalenteil (12, 16) aufweist;
eine erste steckbare Vorrichtung (8) mit kleinem Formfaktor, die in dem Schalenteil des ersten Gegenstücks empfangen wird, um ein optisches Signal der optischen Faser in ein elektrisches Signal umzuwandeln; und
eine zweite steckbare Vorrichtung (15) mit kleinem Formfaktor, das in dem Schalenteil des zweiten Gegenstücks empfangen wird, um das elektrische Signal zurück in ein optisches Signal umzuwandeln,
wobei Leistung für beide, die ersten und zweiten Vorrichtungen mit kleinem Formfaktor durch optische Energie von einer weiteren optischen Faser (19) in Kommunikation mit einer photovoltaischen Zelle (14) bereitgestellt wird, wobei die photovoltaische Zelle konfiguriert ist, um die optische Energie in die Leistung für beide, die ersten und zweiten und steckbaren Vorrichtungen mit kleinem Formfaktor umzuwandeln, und wobei die photovoltaische Zelle in ein Endteil des elektrischen Verbinders geformt ist.

2. Kommunikationsverbindung nach Anspruch 1, wobei die Kommunikationsverbindung zwischen der optischen Faser (7) und einem Unterwasser-Elektronikmodul (6) an einem Bohrlochbaum (5) besteht oder an einer Unterwasser-Abschlussanordnung (2) oder an einer Unterwasserverteilungseinheit besteht.

3. Kommunikationsverbindung nach Anspruch 1 oder 2, wobei die Faser (7) in einer Versorgungsleitung (1) besteht.

4. Verfahren zum Bereitstellen einer Kommunikationsverbindung in einem Unterwasserbohrloch, wobei das Verfahren Folgendes umfasst:
Bereitstellen von ersten und zweiten Gegenstücken (10, 11), die miteinander gekoppelt sind, wobei jedes der ersten und zweiten Gegenstücke ein jeweiliges Schalenteil (12, 16) aufweist;
Benutzen einer ersten steckbaren Vorrichtung (8) mit kleinem Formfaktor, um ein optisches Signal einer optischen Faser (7) in ein elektrisches Signal umzuwandeln;
Anordnen der ersten steckbaren Vorrichtung mit kleinem Formfaktor, um in dem Schalenteil des ersten Gegenstücks empfangen zu werden, um das optische Signal in das elektrische Signal umzuwandeln;
Anordnen einer zweiten steckbaren Vorrichtung (15) mit kleinem Formfaktor, um in dem Schalenteil des zweiten Gegenstücks empfangen zu werden, um das elektrische Signal zurück in ein optisches Signal umzuwandeln, wobei die ersten und zweiten steckbaren Vorrichtungen mit kleinem Formfaktor in einem elektrischen Verbinder empfangen werden; und
Versorgen beider, der ersten und der zweiten steckbaren Vorrichtungen mit kleinem Formfaktor mit optischer Energie von einer weiteren optischen Faser (19) in Kommunikation mit einer photovoltaischen Zelle (14), wobei die photovoltaische Zelle konfiguriert ist, um die optische Energie in Leistung für die ersten und zweiten steckbaren Vorrichtungen mit kleinem Formfaktor umzuwandeln, und wobei die photovoltaische Zelle in ein Endteil des elektrischen Verbinders geformt ist.

5. Verfahren nach Anspruch 4, wobei die Kommunikationsverbindung zwischen der optischen Faser (7) und einem Unterwasser-Elektronikmodul (6) an einem Bohrlochbaum (5) besteht oder an einer Unterwasser-Abschlussanordnung (2) oder an einer Unterwasserverteilungseinheit besteht.

6. Verfahren nach Anspruch 4 oder 5, wobei die Faser (7) in einer Versorgungsleitung (1) besteht.

## Revendications

1. Connexion de communication dans un puits sous-marin par une fibre optique (7), la connexion de communication comprenant :
un connecteur électrique comprenant des première et seconde parties complémentaires (10, 11), les première et seconde parties complémentaires ayant chacune une portion de coque respective (12, 16) ;
un premier petit dispositif enfichable de facteur de forme (8) reçu dans la portion de coque de la première partie complémentaire pour convertir un signal optique de la fibre optique en un signal électrique ; et
un second petit dispositif enfichable de facteur de forme (15) reçu dans la portion de coque de la seconde partie complémentaire pour convertir le signal électrique à nouveau en un signal optique,
dans laquelle l'énergie pour le premier et le second petit dispositif enfichable de facteur de forme est fournie par énergie optique depuis une autre fibre optique (19) en communication avec une cellule photovoltaïque (14), dans laquelle la cellule photovoltaïque est configurée pour convertir l'énergie optique en énergie pour le premier et le second petit dispositif enfichable de facteur de forme, et dans laquelle la cellule photovoltaïque est moulée dans une portion d'extrémité du connecteur électrique.

2. Connexion de communication selon la revendication 1, dans laquelle la connexion de communication se trouve entre ladite fibre optique (7) et un module électronique sous-marin (6) au niveau d'un arbre de puits (5) ou se trouve au niveau d'un ensemble de terminaison immergé (2) ou se trouve au niveau d'une unité de distribution sous-marine.

3. Connexion de communication selon la revendication 1 ou 2, dans laquelle ladite fibre (7) est dans un câble (1).

4. Procédé de fourniture d'une connexion de communication dans un puits sous-marin, le procédé comprenant :
la fourniture des première et seconde parties complémentaires (10, 11) qui sont couplées l'une à l'autre, les première et seconde parties complémentaires ayant chacune une portion de coque respective (12, 16) ;
l'utilisation d'un premier petit dispositif enfichable de facteur de forme (8) pour convertir un signal optique d'une fibre optique (7) en un signal électrique ;
la disposition du premier petit dispositif enfichable de facteur de forme qui doit être reçu dans la portion de coque de la première partie complémentaire pour convertir le signal optique en signal électrique ;
la disposition d'un second petit dispositif enfichable de facteur de forme (15) qui doit être reçu dans la portion de coque de la seconde partie complémentaire pour convertir le signal électrique à nouveau en un signal optique, dans laquelle le premier et le second petit dispositif enfichable de facteur de forme sont reçus dans un connecteur électrique ; et
l'alimentation du premier et du second petits dispositifs enfichables de facteur de forme par énergie optique depuis une autre fibre optique (19) en communication avec une cellule photovoltaïque (14), dans laquelle la cellule photovoltaïque est configurée pour convertir l'énergie optique en énergie pour le premier et le second petit dispositif enfichable de facteur de forme, et dans laquelle la cellule photovoltaïque est moulée dans une portion d'extrémité du connecteur électrique.

5. Procédé selon la revendication 4, dans laquelle la connexion de communication se trouve entre ladite fibre optique (7) et un module électronique sous-marin (6) au niveau d'un arbre de puits (5) ou se trouve au niveau d'un ensemble de terminaison immergé (2) ou se trouve au niveau d'une unité de distribution sous-marine.

6. Procédé selon la revendication 4 ou 5, dans lequel ladite fibre (7) est dans un câble (1).
